# EUROPEAN PATENT SPECIFICATION

(11) **EP 3 207 606 B1**
(45) Date of publication and mention of the grant of the patent: **22.07.2020**
(21) Application number: 15784117.2
(22) Date of filing: 14.10.2015
(51) Int. Cl.: H02B 1/40

(54) **WALL-MOUNTED ELECTRICAL HOUSING**
WANDBEFESTIGTES ELEKTRISCHES GEHÄUSE
BOÎTIER ÉLECTRIQUE À MONTAGE MURAL

(30) Priority: 14.10.2014 GB 201418195
(43) Date of publication of application: 23.08.2017
(73) Proprietor: Aspen Pumps Limited, Hailsham, East Sussex BN27 3WA (GB)
(72) Inventor: SAICH, Claire Louise, Horsham Sussex RH12 4PF (GB); FORSHAW, Chris Alexis, Robertsbridge Sussex TN32 5EN (GB)
(74) Representative: HGF
(86) International application number: PCT/GB2015/053038
(87) International publication number: WO 2016/059408

(56) References cited:
- CN-U- 203 553 442
- US-A1- 2013 214 109
- US-A1- 2013 294 039

## Description

This invention relates to a housing for switchgear configured to mount the switch gear to a vertical surface such as a wall.

### BACKGROUND

It is well known to mount electrical switchgear, such as an isolator, to a wall by screwing the housing of the switchgear to the wall. However, this process can be fiddly as the housing must be opened and the necessary screws screwed through the back of the housing. It is known to provide a backplate that can first be screwed to the wall to which the housing can then be attached. This eases the mounting process. CN 203 553 442 U relates to a housing for electrical components to be mounted to a wall. US 2013/214109A1 relates to a mounting device for securing an electronic component. JPH01137589U and FR1524628 further disclose additional mounting means in the form of screw bosses.

The present invention, at least in the particular embodiments described herein, seeks to provide an alternative housing.

### BRIEF SUMMARY OF THE DISCLOSURE

In accordance with the present invention there is provided a housing for electrical switchgear as claimed in claim 1.

Thus, in accordance with the invention, the retaining member for the backplate is recessed in housing and does not project substantially beyond the mounting surface of the housing. Consequently, the housing can optionally be mounted to a wall without the retaining member interfering with a flush fit of the housing against the wall. This allows the same housing to mounted with or without a backplate.

In the presently preferred embodiment, the rearmost surface of the retaining member is substantially coplanar with the plane defined by the rear mounting surface. In this way, the rearmost surface of the retaining member can provide additional engagement against the wall when the housing is used without a backplate.

The retaining member may be in the form of a hook configured to engage a thickness of the backplate by sliding movement of the housing body relative to the backplate. Alternative retaining members may be used, for example clips or the like.

According to the invention, the retaining member is provided on the screw boss. In this way, the retaining member provides the mounting for the housing with or without a backplate. In embodiments of the invention, the rearmost surface of the retaining portion may extend rearwardly a small distance, such as 1mm, beyond the mounting surface. This is intended to be within the scope of "substantially coplanar". This small distance accommodates unevenness of the wall when the backplate is not used, so that it is ensured that the mounting surface does not prevent the rearmost surface of the retaining portion engaging the wall when the screw bosses are used.

The screw boss may have defined therein a blind screw hole closed by a weakened closure. In this way, the screw boss is not open to the interior of the housing unless the boss is to be used to mount the housing, in which case the weakened closure can be penetrated so that a screw can pass through the boss.

The invention extends to a housing in combination with a backplate. The backplate may have defined therein at least one hole for receiving the retaining member. In one embodiment, the backplate is received at least partially in the recess defined in the housing body. The rearmost surface of the backplate may be substantially coplanar with the plane defined by the rear mounting surface, when the retaining member engages the backplate. In this way, the housing can be flush fitted onto the wall with the mounting surface against the wall whether or not the backplate is used.

The backplate may have a length received within the recess defined in the housing body and the length may be less than an internal length of the recess, whereby the housing body is slidable relative to the backplate to engage the retaining member with the backplate. Thus, the backplate may be able to slide within the recess to engage and disengage with the retaining member.

The backplate may have defined therein a screw passage for receiving a retaining screw from the housing body, whereby to restrain relative sliding of the housing body relative to the backplate. The retaining screw may also secure a front panel to the housing body. In this way, a single screw can be used to secure the mounted housing.

The disclosure extends to a backplate configured for engagement with a housing as described above.

### BRIEF DESCRIPTION OF THE DRAWINGS

Embodiments of the invention are further described hereinafter with reference to the accompanying drawings, in which:
Figure 1 is a rear perspective view of an electrical housing and backplate in accordance with an embodiment of the invention;
Figure 2 is a rear perspective view of the electrical housing of Figure 1 with the housing positioned on the backplate; and
Figure 3 is a rear perspective view of the electrical housing of Figures 1 and 2 with the housing mounted on the backplate.

### DETAILED DESCRIPTION

The present disclosure relates to an electrical housing for switchgear or the like. The housing is configured for mounting to a wall or other vertical surface by means of an optional backplate. In the presently described embodiment, the housing is for an isolator for air conditioning equipment. The housing is formed as a plastics moulding and the backplate is formed as a separate plastics moulding.

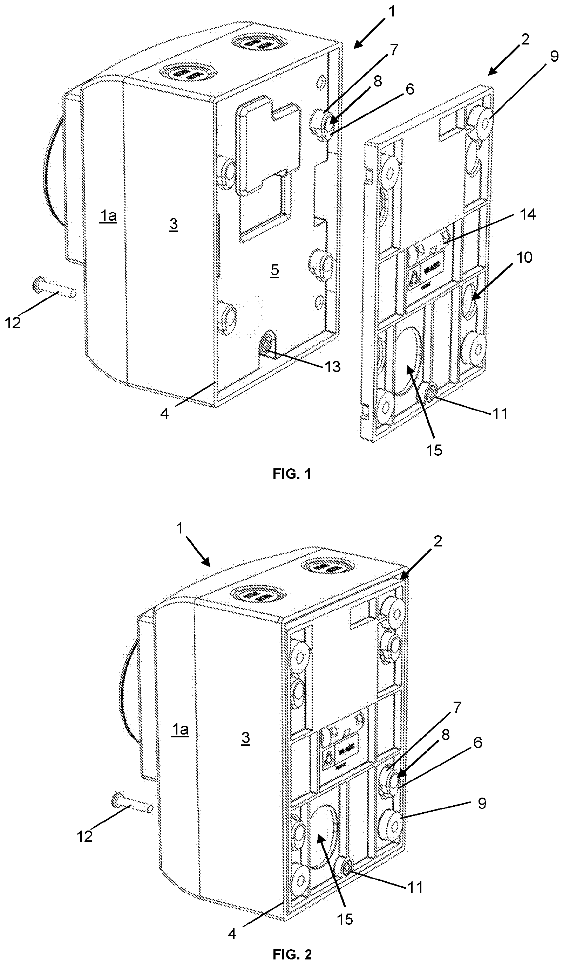

Figure 1 is a rear perspective view of an electrical housing 1 and a backplate 2 in accordance with an embodiment of the invention. The housing 1 forms an enclosure for electrical equipment, such as switchgear, in substantially conventional manner. The enclosure is defined by an outer wall 3 of the housing 1. At the rear of the housing 1, the outer wall 3 terminates in a mounting surface 4 at the rearmost end of the outer wall 3, which is positioned against the surface to which the housing 1 is to be mounted, in use. Within the outer wall 3, a rear panel 5 of the housing 1 is provided. The outer wall 3 extends rearward beyond the plane of the rear panel 5 to the mounting surface 4, so that a recess is formed between the plane of the rear panel 5 and the plane of the mounting surface 4 in order to accommodate the backplate 2. In this way, the backplate 2 can be received within the recess with the rearmost surface of the backplate flush with the mounting surface 4 of the housing 1.

The rear panel 5 of the housing 1 is provided with a plurality of retaining members 6, in this case four. Each retaining member 6 is provided on a boss 7 which mounts the retaining member 6 to the rear panel 5 and spaces the retaining member 6 therefrom. The retaining member 6 has a larger downward extent than the boss 7 so that the boss 7 and the retaining member 6 together define a hook for engaging the backplate 2. The spacing of the retaining member 6 from the rear panel 5 corresponds substantially to the thickness of the portion of the backplate 2 to be received within the hook in order to ensure positive engagement of the retaining member 6 with the backplate 2. The rearmost surface of the retaining member 6 is substantially coplanar with the mounting surface 4 of the housing. The boss 7 and the retaining member 6 have a blind screw hole 8 defined therethrough. The screw hole 8 is closed at its end within the housing by a weakened portion. The weakened portion is dished to receive the end of a drill bit in the direction from the interior of the housing 1. Alternatively or in addition, the weakened portion may be dished to receive the end of a drill bit in the direction from the exterior of the housing 1. Where the backplate 2 is not used, the weakened portion can be penetrated by a suitable drill (or other tool) and the screw holes 8 can be used to secure the housing 1 to a surface, such as a wall. Flexible plastics caps (not shown) may be provided within the housing 1 to cover the screw holes 8 in order to maintain sealing of the housing 1.

The backplate 2 is provided at its corners with a plurality of screw bosses 9, in this case four, for receiving screws to mount the backplate to a surface, such as a wall. Defined within the backplate 2 are a plurality of elongate holes 10 corresponding in number to the retaining members 6 of the housing 1 and dimensioned to receive the retaining members 6 therethrough. The backplate 2 is sized to be shorter than the recess defined by the housing 1 for receiving the backplate 2 in order that the backplate 2 can slide relative to the housing 1 so that a thickness of the backplate material at the lowermost edge of the holes 10 engages between the retaining members 6 and the rear panel 5 of the housing 1. In this way, the retaining members 6 retain the backplate 2 in engagement with the housing 1. In the region of the elongate holes 10, the backplate 2 is recessed to accommodate the retaining members 6, so that the retaining members 6 do not project beyond the rearmost surface of the backplate 2, defined by the rearmost surfaces of the screw bosses 9.

A screw passage 11 is provided on the backplate 2 for receiving a retaining screw 12 which passes through a corresponding threaded hole 13 in the housing. The screw passage 11 and the threaded hole 13 are only aligned when the backplate 2 and the housing 1 are engaged and retained by the retaining members 6. The retaining screw 12 when screwed into the screw passage 11 prevents relative sliding movement of the backplate 2 and the housing 1 and thereby ensures that the housing 1 remains in engagement with the backplate 2. This is advantageous in that only a single screw 12 is required to retain or release the housing 1 in engagement with the backplate 2. A recess may be provided in a front panel 1a of the housing 1 to accommodate the retaining screw 12 in order that the retaining screw 12 does not need to be very long. The retaining screw may also serve to retain the front panel 1a on the housing 1.

The backplate 2 is provided with a spirit level 14 to assist the user in correctly positioning the backplate 2 on a wall. The backplate 2 also has defined therein a wiring hole 15 though which wiring from the wall can pass into the housing 1. The wiring hole 15 is elongate (obround) in order to accommodate the sliding movement of the housing 1 relative to the backplate 2 and is large enough to accept a cable gland to maintain the sealing of housing 1.

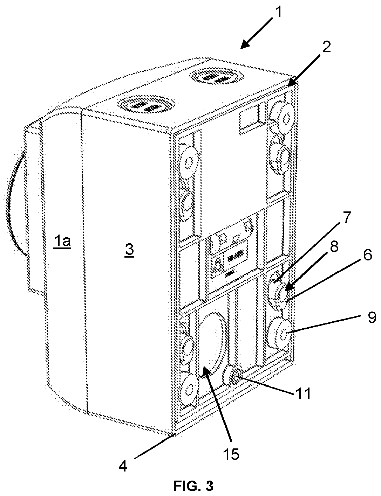

In use, the backplate 2 is screwed in position on a wall or other surface using the screw bosses 9 and appropriate screws. The necessary electrical connections are then made to the electrical components in the housing 1. The housing 1 is then mounted to the backplate 2 by passing the retaining members 6 through the elongate holes 10. This is the position shown in Figure 2. The housing 1 is then slid downwardly so that the retaining members 6 engage the backplate 2. This is the position shown in Figure 3. The front panel 1a of the housing 1 is then attached. Finally, the retaining screw 12 is passed through the front panel 1a of the housing 1 and secured to prevent subsequent sliding movement of the housing 1 relative to the backplate 2.

If the backplate 2 is not used, the housing 1 is mounted to the wall using only the screw holes 8 through the bosses 7. It will be appreciated that whether or not the backplate 2 is used the mounting surface 4 of the housing 1 is substantially flush against the wall.

In summary, a housing for electrical switchgear is configured for mounting to a wall and comprises a housing body 1 defining a rear mounting surface 4 and retaining members 6 configured for engaging a backplate 2 mounted to a wall, in order to mount the housing body 1 on the wall. The retaining members 6 are provided in a recess defined in the housing body 1, such that a rearmost surface of the retaining members 6 extends rearwardly substantially no further than a plane defined by the rear mounting surface 4. The housing 1 has the advantage that it can fit flush against the wall even when a backplate 2 is provided.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention is as defined in the appended claims.

## Claims

1. A housing (1) for electrical switchgear, the housing being configured for mounting to a wall and comprising:
a housing body defining a rear mounting surface (4) for positioning substantially flush against the wall;
at least one retaining member (6) configured for engaging a backplate (2) mounted to a wall, whereby to mount the housing body on the wall,
wherein the retaining member is provided in a recess defined in the housing body, such that a rearmost surface of the retaining member extends rearwardly substantially no further than a plane defined by the rear mounting surface,
wherein the recess is for receiving the backplate at least partially therein, and
wherein the housing body comprises at least one screw boss (7) for receiving a mounting screw for mounting the housing body to the wall in the absence of a backplate, **characterized in that** the retaining member (6) is provided on the screw boss (7).

2. A housing as claimed in claim 1, wherein the rearmost surface of the retaining member is substantially coplanar with the plane defined by the rear mounting surface.

3. A housing as claimed in any preceding claim, wherein the retaining member is in the form of a hook configured to engage a thickness of the backplate by sliding movement of the housing body relative to the backplate.

4. A housing as claimed in any preceding claim, wherein the screw boss has defined therein a blind screw hole (8) closed by a weakened closure.

5. A housing as claimed in any preceding claim in combination with a backplate (2).

6. A housing as claimed in claim 5, wherein the backplate has defined therein at least one hole (10) for receiving the retaining member.

7. A housing as claimed in claim 5 or 6, wherein the backplate is received at least partially in the recess defined in the housing body.

8. A housing as claimed in claim 7, wherein the rearmost surface of the backplate is substantially coplanar with the plane defined by the rear mounting surface, when the retaining member engages the backplate.

9. A housing as claimed in claim 7 or 8, wherein the backplate has a length received within the recess defined in the housing body and the length is less than an internal length of the recess, whereby the housing body is slidable relative to the backplate to engage the retaining member with the backplate.

10. A housing as claimed in any of claims 5 to 9, wherein the backplate has defined therein a screw passage (11) for receiving a retaining screw (12) from the housing body, whereby to restrain relative sliding of the housing body relative to the backplate.

11. A housing as claimed in claim 10, wherein the retaining screw (12) also secures a front panel to the housing body.

12. A housing as claimed in any of claims 5 to 11, wherein the backplate comprises a spirit level (14).

## Patentansprüche

1. Gehäuse (1) für eine elektrische Schaltanlage, wobei das Gehäuse für eine Wandmontage gestaltet ist und folgendes umfasst:
einen Gehäusekörper, der eine hintere Befestigungsoberfläche (4) für eine im Wesentlichen bündige Positionierung an der Wand definiert;
mindestens ein Sicherungselement (6), das für einen Eingriff mit einer Rückplatte (2) gestaltet ist, die an einer Wand befestigt ist, wodurch der Gehäusekörper an der Wand befestigt wird;
wobei das Sicherungselement in einer in dem Gehäusekörper definierten Aussparung bereitgestellt ist, so dass sich eine hinterste Oberfläche des Sicherungselements im Wesentlichen nicht weiter nach hinten erstreckt als eine Ebene, die durch die hintere Befestigungsoberfläche definiert ist, wobei die Aussparung zur Aufnahme der Rückplatte wenigstens teilweise darin vorgesehen ist, und wobei der Gehäusekörper mindestens einen Schraubenvorsprung (7) zur Aufnahme einer Befestigungsschraube zur Befestigung des Gehäusekörpers an der Wand beim Fehlen einer Rückplatte umfasst, **dadurch gekennzeichnet, dass** das Sicherungselement (6) an dem Schraubenvorsprung (7) bereitgestellt ist.

2. Gehäuse nach Anspruch 1, wobei die hinterste Oberfläche des Sicherungselements im Wesentlichen koplanar ist mit der durch die hintere Befestigungsoberfläche definierten Ebene.

3. Gehäuse nach einem der vorstehenden Ansprüche, wobei das Sicherungselement in Form eines Hakens vorgesehen ist, der so gestaltet ist, dass er mit einer Dicke der Rückplatte durch eine Schiebebewegung des Gehäusekörpers im Verhältnis zu der Rückplatte eingreift.

4. Gehäuse nach einem der vorstehenden Ansprüche, wobei der Schraubenvorsprung ein darin definiertes Schraubenblindloch (8) aufweist, das durch einen verdünnten Verschluss verschlossen ist.

5. Gehäuse nach einem der vorstehenden Ansprüche in Kombination mit einer Rückplatte (2).

6. Gehäuse nach Anspruch 5, wobei in der Rückplatte mindestens ein Loch (10) zur Aufnahme des Sicherungselements definiert ist.

7. Gehäuse nach Anspruch 5 oder 6, wobei die Rückplatte wenigstens teilweise in der in dem Gehäusekörper definierten Aussparung aufgenommen wird.

8. Gehäuse nach Anspruch 7, wobei die hinterste Oberfläche der Rückplatte im Wesentlichen koplanar ist mit der durch die hintere Befestigungsoberfläche definierten Ebene, wenn das Sicherungselement mit der Rückplatte eingreift.

9. Gehäuse nach Anspruch 7 oder 8, wobei die Rückplatte eine in der in dem Gehäusekörper definierten Aussparung aufgenommene Länge aufweist, und wobei die Länge kleiner ist als eine innere Länge der Aussparung, wodurch der Gehäusekörper im Verhältnis zu der Rückplatte verschiebbar ist, um einen Eingriff des Sicherungselements mit der Rückplatte vorzusehen.

10. Gehäuse nach einem der Ansprüche 5 bis 9, wobei in der Rückplatte ein Schraubendurchgang (11) zur Aufnahme einer Sicherungsschraube (12) von dem Gehäusekörper definiert ist, wodurch die relative Verschiebung des Gehäusekörpers zu der Rückplatte begrenzt wird.

11. Gehäuse nach Anspruch 10, wobei die Sicherungsschraube (12) ferner eine vordere Platte an dem Gehäusekörper sichert.

12. Gehäuse nach einem der Ansprüche 5 bis 11, wobei die Rückplatte eine Wasserwaage (14) umfasst.

## Revendications

1. Boîtier (1) pour appareillage de commutation électrique, le boîtier étant conçu pour être monté sur un mur et comprenant :
un corps de boîtier définissant une surface de montage arrière (4) pour un positionnement sensiblement plaqué contre le mur ;
au moins un élément de retenue (6) conçu pour venir en prise avec une plaque arrière (2) montée sur un mur, permettant de monter le corps de boîtier sur le mur,
l'élément de retenue étant disposé dans un évidement défini dans le corps de boîtier, de sorte qu'une surface la plus arrière de l'élément de retenue ne s'étende pas vers l'arrière sensiblement au-delà d'un plan défini par la surface de montage arrière,
l'évidement étant destiné à recevoir la plaque arrière au moins partiellement en son sein, et
le corps de boîtier comprenant au moins un bossage de vis (7) destiné à recevoir une vis de fixation pour monter le corps de boîtier sur le mur en l'absence d'une plaque arrière, **caractérisé en ce que** l'élément de retenue (6) est disposé sur le bossage de vis (7).

2. Boîtier selon la revendication 1, la surface la plus arrière de l'élément de retenue étant sensiblement coplanaire avec le plan défini par la surface de montage arrière.

3. Boîtier selon l'une quelconque des revendications précédentes, l'élément de retenue étant sous la forme d'un crochet conçu pour venir en prise avec une épaisseur de la plaque arrière par un mouvement coulissant du corps de boîtier par rapport à la plaque arrière.

4. Boîtier selon l'une quelconque des revendications précédentes, le bossage de vis ayant défini en son sein un trou de vis borgne (8) fermé par une fermeture affaiblie.

5. Boîtier selon l'une quelconque des revendications précédentes, en combinaison avec une plaque arrière (2).

6. Boîtier selon la revendication 5, la plaque arrière ayant défini en son sein au moins un trou (10) pour recevoir l'élément de retenue.

7. Boîtier selon la revendication 5 ou 6, la plaque arrière étant reçue au moins partiellement dans l'évidement défini dans le corps de boîtier.

8. Boîtier selon la revendication 7, la surface la plus arrière de la plaque arrière étant sensiblement coplanaire avec le plan défini par la surface de montage arrière, lorsque l'élément de retenue vient en prise avec la plaque arrière.

9. Boîtier selon la revendication 7 ou 8, la plaque arrière ayant une longueur reçue dans l'évidement défini dans le corps de boîtier et la longueur étant inférieure à une longueur interne de l'évidement, de sorte que le corps de boîtier puisse coulisser par rapport à la plaque arrière pour mettre en prise l'élément de retenue avec la plaque arrière.

10. Boîtier selon l'une quelconque des revendications 5 à 9, la plaque arrière ayant défini en son sein un passage de vis (11) pour recevoir une vis de retenue (12) du corps de boîtier, afin de limiter le coulissement relatif du corps de boîtier par rapport à la plaque arrière.

11. Boîtier selon la revendication 10, la vis de retenue (12) fixant également un panneau avant au corps de boîtier.

12. Boîtier selon l'une quelconque des revendications 5 à 11, la plaque arrière comprenant en outre un niveau à bulle (14).
